# EUROPEAN PATENT APPLICATION

(11) **EP 4 280 493 A1**
(43) Date of publication of application: **22.11.2023**
(21) Application number: 22739803.9
(22) Date of filing: 17.01.2022
(51) Int. Cl.: H04L 1/00, H04L 5/00, H04W 24/10, H04B 7/06, H04W 72/12, H04W 72/14

(54) **METHOD, USER EQUIPMENT, PROCESSING DEVICE, STORAGE MEDIUM, AND COMPUTER PROGRAM FOR TRANSMITTING CSI REPORT, AND METHOD AND BASE STATION FOR RECEIVING CSI REPORT**

(30) Priority: 15.01.2021 KR 20210006345
(71) Applicant: LG Electronics Inc., Yeongdeungpo-gu Seoul 07336 (KR)
(72) Inventor: BAE, Duckhyun, Seoul 06772 (KR); YANG, Suckchel, Seoul 06772 (KR)
(74) Representative: Frenkel, Matthias Alexander
(86) International application number: PCT/KR2022/000809
(87) International publication number: WO 2022/154611

(57) **Abstract**

A UE may: receive DCI triggering a CSI report; determine a UL resource for the CSI report on the basis of the DCI; determine a PDSCH for the CSI report on the basis of the UL resource and a CSI calculation time; determine CSI on the basis of the PDSCH; and transmit the CSI report containing the CSI on the UL resource.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### TECHNICAL PROBLEM

As new radio communication technology has been introduced, the number of UEs to which a BS should provide services in a prescribed resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

A method to efficiently support various services with different requirements in a wireless communication system is also needed.

Overcoming delay or latency is an important challenge to applications, performance of which is sensitive to delay/latency.

In addition, a new channel state information reporting method considering the introduction of various services is required.

The objects to be achieved with the present disclosure are not limited to what has been particularly described hereinabove and other objects not described herein will be more clearly understood by persons skilled in the art from the following detailed description.

### TECHNICAL SOLUTION

In an aspect of the present disclosure, there is provide a method of transmitting a channel state information (CSI) report by a user equipment (UE) in a wireless communication system. The method may include: receiving downlink control information (DCI) triggering the CSI report; determining an uplink (UL) resource for the CSI report based on the DCI; determining a physical downlink shared channel (PDSCH) for the CSI report based on the UL resource and a CSI computation time; determining CSI based on the PDSCH; and transmitting the CSI report including the CSI on the UL resource.

In another aspect of the present disclosure, there is provided a UE configured to transmit a CSI report in a wireless communication system. The UE may include: at least one transceiver; at least one processor; and at least one computer memory operably connected to the at least one processor and configured to store instructions that, when executed, cause the at least one processor to perform operations. The operations may include: receiving DCI triggering the CSI report; determining a UL resource for the CSI report based on the DCI; determining a PDSCH for the CSI report based on the UL resource and a CSI computation time; determining CSI based on the PDSCH; and transmitting the CSI report including the CSI on the UL resource.

In another aspect of the present disclosure, there is provided a processing device in a wireless communication system. The processing device may include: at least one processor; and at least one computer memory operably connected to the at least one processor and configured to store instructions that, when executed, cause the at least one processor to perform operations. The operations may include: receiving DCI triggering a CSI report; determining a UL resource for the CSI report based on the DCI; determining a PDSCH for the CSI report based on the UL resource and a CSI computation time; determining CSI based on the PDSCH; and transmitting the CSI report including the CSI on the UL resource.

In another aspect of the present disclosure, there is provided a computer-readable storage medium. The computer-readable storage medium may be configured to store at least one computer program including instructions that, when executed by at least one processor, cause the at least one processor to perform operations for a UE. The operations may include: receiving DCI triggering a CSI report; determining a UL resource for the CSI report based on the DCI; determining a PDSCH for the CSI report based on the UL resource and a CSI computation time; determining CSI based on the PDSCH; and transmitting the CSI report including the CSI on the UL resource.

In another aspect of the present disclosure, there is provided a computer program stored in a computer-readable storage medium. The computer program may include at least one program code including instructions that, when executed, cause at least one processor to perform operations. The operations may include: receiving DCI triggering a CSI report; determining a UL resource for the CSI report based on the DCI; determining a PDSCH for the CSI report based on the UL resource and a CSI computation time; determining CSI based on the PDSCH; and transmitting the CSI report including the CSI on the UL resource.

In each aspect of the present disclosure, determining the PDSCH for the CSI report based on the UL resource and the CSI computation time may include determining, as the PDSCH for the CSI report, a most recently received PDSCH among PDSCHs with a distance of T or more from a start of the UL resource, T_CSI to an end of each of the corresponding PDSCHs, where T is the CSI computation time.

In each aspect of the present disclosure, determining the PDSCH for the CSI report based on the UL resource and the CSI computation time may include determining a PDSCH of which reception ends between a time of T_CSI - T - T_c and a time of T_CSI - T as the PDSCH for the CSI report, where T_CSI is a start of the UL resource, T is the CSI computation time, and T_c is a PDSCH coherent time.

In each aspect of the present disclosure, determining the PDSCH for the CSI report based on the UL resource and the CSI computation time may include determining a PDSCH of which reception starts between a time of T_CSI - T - T_c and a time of T_CSI - T as the PDSCH for the CSI report, where T_CSI is a start of the UL resource, T is the CSI computation time, and T_c is a PDSCH coherent time.

In each aspect of the present disclosure, the operations may further include receiving a CSI configuration for a PDSCH-based CSI report.

In each aspect of the present disclosure, the CSI configuration may include information on a PUCCH.

In each aspect of the present disclosure, the operations may include, based on that the transmission of the CSI report overlaps in time with transmission of other UCI and that the other UCI is another PDSCH-based CSI report: concatenating the CSI report and the other PDSCH-based CSI report; and transmitting the concatenated CSI report.

In each aspect of the present disclosure, the operations may include, based on the transmission of the CSI report overlapping in time with transmission of other UCI and the other UCI being a different type of CSI report, dropping the transmission of the other UCI.

In another aspect of the present disclosure, there is provided a method of receiving a CSI report by a base station (BS) in a wireless communication system. The method may include: transmitting DCI triggering the CSI report to a UE; determining a UL resource for the CSI report based on the DCI; determining a PDSCH for the CSI report based on the UL resource and a CSI computation time; and receiving the CSI report including CSI based on the PDSCH on the UL resource.

In a further aspect of the present disclosure, there is provided a BS configured to receive a CSI report in a wireless communication system. The BS may include: at least one transceiver; at least one processor; and at least one computer memory operably connected to the at least one processor and configured to store instructions that, when executed, cause the at least one processor to perform operations. The operations may include: transmitting DCI triggering the CSI report to a UE; determining a UL resource for the CSI report based on the DCI; determining a PDSCH for the CSI report based on the UL resource and a CSI computation time; and receiving the CSI report including CSI based on the PDSCH on the UL resource.

In each aspect of the present disclosure, determining the PDSCH for the CSI report based on the UL resource and the CSI computation time may include determining, as the PDSCH for the CSI report, a most recently transmitted PDSCH among PDSCHs with a distance of T or more from a start of the UL resource, T_CSI to an end of each of the corresponding PDSCHs, where T is the CSI computation time.

In each aspect of the present disclosure, determining the PDSCH for the CSI report based on the UL resource and the CSI computation time may include determining a PDSCH of which transmission ends between a time of T_CSI - T - T_c and a time of T_CSI - T as the PDSCH for the CSI report, where T_CSI is a start of the UL resource, T is the CSI computation time, and T_c is a PDSCH coherent time.

In each aspect of the present disclosure, determining the PDSCH for the CSI report based on the UL resource and the CSI computation time may include determining a PDSCH of which transmission starts between a time of T_CSI - T - T_c and a time of T_CSI - T as the PDSCH for the CSI report, where T_CSI is a start of the UL resource, T is the CSI computation time, and T_c is a PDSCH coherent time.

In each aspect of the present disclosure, the operations may further include transmitting a CSI configuration for a PDSCH-based CSI report.

In each aspect of the present disclosure, the CSI configuration may include information on a PUCCH.

In each aspect of the present disclosure, the operations may include, based on the reception of the CSI report overlapping in time with reception of other UCI and the other UCI being another PDSCH-based CSI report, receiving a CSI report obtained by concatenating the CSI report and the other PDSCH-based CSI report.

In each aspect of the present disclosure, the operations may include, based on the reception of the CSI report overlapping in time with reception of other UCI and the other UCI being a different type of CSI report, dropping the reception of the other UCI.

The foregoing solutions are merely a part of the examples of the present disclosure and various examples into which the technical features of the present disclosure are incorporated may be derived and understood by persons skilled in the art from the following detailed description.

### ADVANTAGEOUS EFFECTS

According to some implementations of the present disclosure, a wireless communication signal may be efficiently transmitted/received. Accordingly, the total throughput of a wireless communication system may be raised.

According to some implementations of the present disclosure, various services with different requirements may be efficiently supported in a wireless communication system.

According to some implementations of the present disclosure, delay/latency generated during radio communication between communication devices may be reduced.

According to some implementations of the present disclosure, resources required for channel state information (CSI) measurement may be saved.

According to some implementations of the present disclosure, fast CSI reporting may be achieved.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 7 illustrates an example of UE operation flows according to some implementations of the present disclosure;
FIG. 8 illustrates PDSCHs related to CSI reporting according to some implementations of the present disclosure; and
FIG. 9 illustrates an example of BS operation flows according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

For dual connectivity (DC) operation, the term SpCell refers to the Pcell of a master cell group (MCG) or the Pcell of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes a PSCell and 0 or more Scells. PSCell is a primary Scell of an SCG. For a UE in RRC_CONNECTED state, not configured with CA or DC, only one serving cell including only the Pcell is present. For a UE in RRC_CONNECTED state, configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

A UE with which CA is configured and DC is not configured may be configured with a Pcell PUCCH group, which includes the Pcell and 0 or more Scells, and an Scell PUCCH group, which includes only Scell(s). For the Scells, an Scell on which a PUCCH associated with the corresponding cell is transmitted (hereinafter, PUCCH cell) may be configured. An Scell indicated as the PUCCH Scell belongs to the Scell PUCCH group and PUCCH transmission of related UCI is performed on the PUCCH Scell. An Scell, which is not indicated as the PUCCH Scell or in which a cell indicated for PUCCH transmission is a Pcell, belongs to the Pcell PUCCH group and PUCCH transmission of related UCI is performed on the Pcell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, the PDCCH refers to a set of time-frequency resources (e.g., resource elements (REs)) that is a set of REs that carry downlink control information (DCI), and the PDSCH refers to a set of time-frequency resources that is a set of REs that carry DL data. The PUCCH, PUSCH, and PRACH refer to a set of time-frequency resources that is a set of time-frequency REs that carry uplink control information (UCI), UL data, and random access signals, respectively. In the following description, the meaning of "The UE transmits/receives the PUCCH/PUSCH/PRACH" is that the UE transmits/receives the UCI /UL data/random access signals on or through the PUCCH/PUSCH/PRACH, respectively. In addition, the meaning of "the BS transmits/receives the PBCH/PDCCH/PDSCH" is that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives an SS/PBCH resource block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, reception of physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

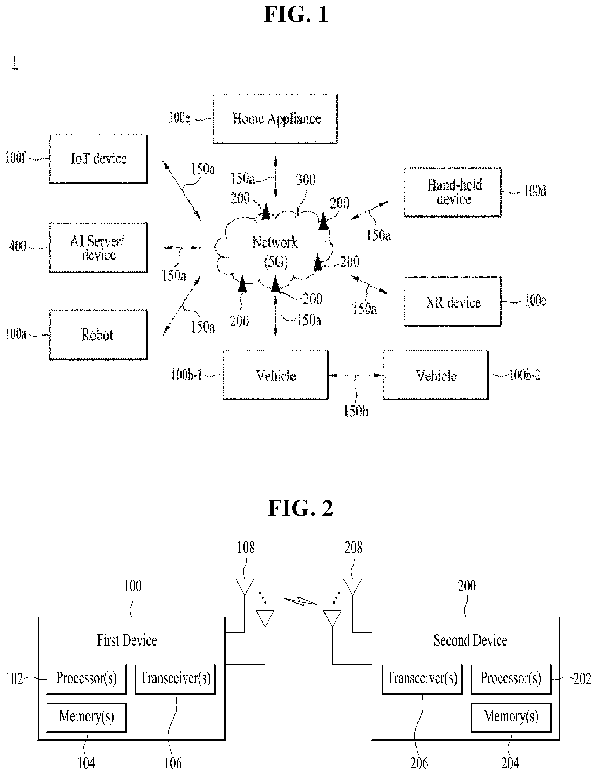

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

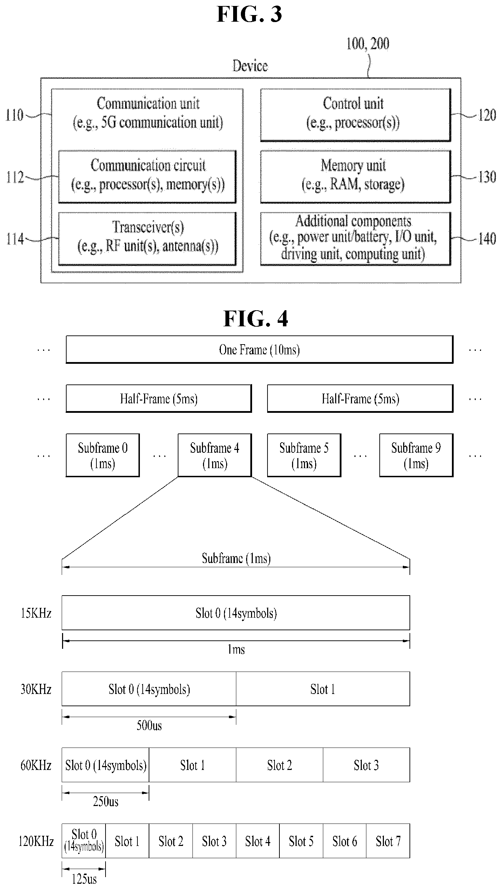

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (Δfₘₐₓ*N_{f}/100)*T_{c} = 10 ms and is divided into two half-frames of 5 ms each. A basic time unit for NR is T_{c} = 1/(Δfₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref} = 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | A |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{stot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

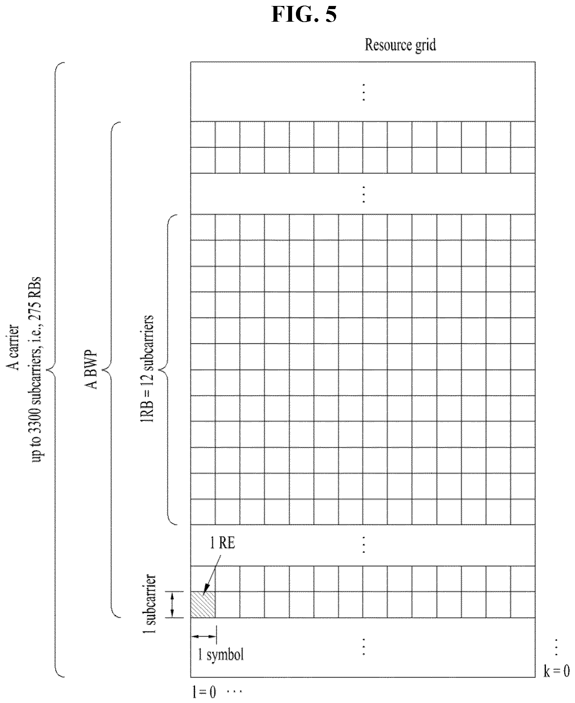

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index / representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = *L*_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CSI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, Nuci.
- PUCCH resource set #0, if the number of UCI bits =< 2
- PUCCH resource set #1, if 2< the number of UCI bits =< N₁
   ...
- PUCCH resource set #(K-1), if N_{K-2} < the number of UCI bits =< N_{K-1}

Here, K represents the number of PUCCH resource sets (K> 1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4.

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

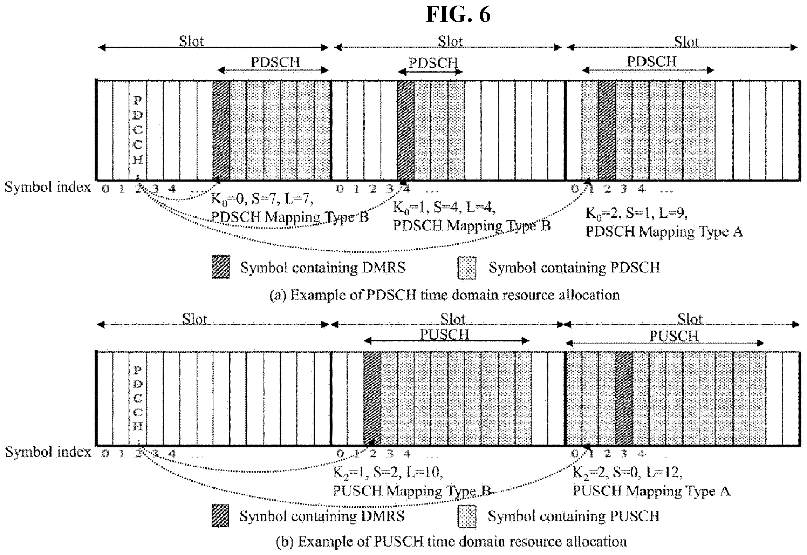

FIG. 6 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol *S* relative to the start of the slot with the PDSCH or PUSCH and the number of consecutive symbols, *L,* counting from the symbol *S*. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

For operations with shared spectrum channel access, a PDCCH may be used for the following purposes: triggering search space set group switching; indicating available RB sets and a channel occupancy time duration to one or more UEs; and indicating DL feedback information for a configured grant PUSCH.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index *m*+1 pointing to the allocation table, indicating a combination of the start symbol *S,* the length *L*, and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset* and *S*(derived from *SLIV*) and to recur with *periodicity.* After the UL grant is configured for configured grant Type 1, the UE may consider that the UL grant recurs in association with each symbol satisfying: [(SFN * *numberOfSlotsPerFrame* (*numberOfSymbolsPerSlot*) + (slot number in the frame * *numberOfSymbolsPerSlot*) + symbol number in the slot] = (*timeDomainOffset * numberOfSymbolsPerSlot* + *S* + N * *periodicity*) modulo (1024 * *numberOfSlotsPerFrame* * *numberOfSymbolsPerSlot*), for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:
- *cs-RNTI* corresponding to a CS-RNTI for activation, deactivation, and retransmission; and
- *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN * *numberOfSlotsPerFrame* * *numberOfSymbolsPerSlot*) + (slot number in the frame * *numberOfSymbolsPerSlot*) + symbol number in the slot] = [(SFN_{start time} * *numberOfSlotsPerFrame* * *numberOfSymbolsPerSlot* + slot_{start time} * *numberOfSymbolsPerSlot* + symbol_{start time}) + N * *periodicity*] modulo (1024 * *numberOfSlotsPerFrame* * *numberOfSymbolsPerSlot*)*,* for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of a HARQ process for a configured grant for operation with shared spectrum channel access, and *harq-ProcID-Offset2* is an offset of a HARQ process for a configured grant. In the present disclosure, *cg-RetransmissionTimer* is a duration after (re)transmission based on a configured grant in which the UE should not autonomously perform retransmission based on the HARQ process of the (re)transmission. *cg-RetransmissionTimer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = [floor(CURRENT_symbol/*periodicity*)] modulo *nrofHARQ-Processes.* For configured UL grants with *harq-ProcID-Offset2,* the HARQ process ID associated with the first symbol of UL transmission may be derived from the following equation: HARQ Process ID = [floor(CURRENT _symbol / *periodicity*)] modulo *nrofHARQ-Processes* + *harq-ProcID-Offset2,* where CURRENT_symbol = (SFN * *numberOfSlotsPerFrame * numberOfSymbolsPerSlot* + slot number in the frame * *numberOfSymbolsPerSlot* + symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select a HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling (e.g., SPS configuration) used to configure a semi-persistent transmission:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *n1PUCCH-AN* that provides a HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

Multiple DL SPS configurations may be configured within the BWP of a serving cell. After DL assignment is configured for SPS, the UE may consider sequentially that N-th DL assignment occurs in a slot satisfying: (*numberOfSlotsPerFrame* * SFN + slot number in the frame) = [(*numberOfSlotsPerFrame* * SFN_{start time} + slot_{start time}) + N * *periodicity* numberOfSlotsPerFrame* / 10] modulo (1024 * *numberOfSlotsPerFrame*), where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* used to derive HARQ process IDs for configured DL assignments may be further provided by the BS to the UE. *harq-ProcID-Offset* is an offset of a HARQ process for SPS. For configured DL assignments without *harq-ProcID-Offset,* a HARQ process ID associated with a slot in which DL transmission starts may be determined from the following equation: HARQ Process ID = [floor (CURRENT_slot * 10 / (*numberOfSlotsPerFrame* * *periodicity*))] modulo *nrofHARQ-Processes,* where CURRENT_slot = [(SFN * *numberOfSlotsPerFrame*) + slot number in the frame], and *numberOfSlotsPerFrame* denotes the number of consecutive slots per frame. For configured DL assignments with *harq-ProcID-Offset,* a HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT_slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 4 and Table 5. Table 4 shows an example of special fields for DL SPS and UL grant Type 2 scheduling activation PDCCH validation, and Table 5 shows an example of special fields for DL SPS and UL grant Type 2 scheduling release PDCCH validation.

**Table 4**

| | DCI format 0_0/0_1 | DCI format 10 | DCI format 11 |
|---|---|---|---|
| HARQ process number | set to all '0's | set to all '0's | set to all '0's |
| Redundancy version | set to '00' | set to '00' | For the enabled transport block: set to '00' |

**Table 5**

| | DCI format 0 0 | DCI format 10 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

In 3GPP-based systems, CSI may include the following indicators/reports: a channel quality indicator (CQI), precoding matrix indicator (PMI), CSI-RS resource indicator (CRI), SS/PBCH block resource indicator (SSBRI), layer indicator (LI), rank indicator (RI), layer-1 reference signal received power (L1-RSRP), or layer-1 signal to interference and noise ratio (L1-SINR). For the CQI, PMI, CRI, SSBRI, LI, RI, or L1-RSRP, the UE may be configured with N *CSI-ReportConfig* reporting settings (where N>=1), M *CSI-ResourceConfig* resource settings (where M>=1), and one or two list(s) of trigger states (given by higher layer parameters *CSI-AperiodicTriggerStateList* and *CSI-SemiPersistentOnPUSCH-TriggerStateList*). Each trigger state in *CSI-AperiodicTriggerStateList* includes a list of associated *CSI-ReportConfigs,* which selectively indicate resource set IDs for interference related to a channel, and each trigger state in *CSI-SemiPersistentOnPUSCH-TriggerStateList* includes one associated *CSI-ReportConfig.*

There are three types of reporting: periodic CSI (P-CSI) reporting, semi-persistent CSI (SP-CSI) reporting, and aperiodic CSI (A-CSI) reporting. The UE performs CSI reporting based on an RRC configuration for the CSI reporting by the BS. The reporting configuration for CSI may be aperiodic (using a PUSCH), periodic (using a PUCCH), or semi-persistent (using a PUCCH and a DCI activated PUSCH).

In conventional wireless communication systems, the BS transmits an RS (e.g., CSI-RS, SSB, etc.) for CSI reporting, and the UE performs measurement for the RS based on the configuration or triggering from the BS and reports CSI periodically or aperiodically based on the measured value. However, URLLC services may have unpredictable and sporadic traffic characteristics. As a result, periodic CSI reporting based on the RS may lead to unnecessary resource wastage, and aperiodic CSI reporting based on the RS may not be suitable for burst transmission performed in a short period of time due to the latency of CSI computation, etc.

In this document, implementations for addressing these issues will be described. In some implementations of the present disclosure, the UE may report a result of PDSCH reception to the BS. In some implementations of the present disclosure, the UE may perform CSI reporting based on the PDSCH reception result, thereby reducing the burden of measuring a CSI-RS separately. In addition, since the UE performs the CSI reporting based on the PDSCH reception, the UE may save the time required for CSI computation based on the RS. That is, the UE may perform the CSI reporting immediately after the PDSCH reception. The UE may report CSI based on the PDSCH reception result according to some implementations of the present disclosure described below to allow the BS to select a correct MCS when performing scheduling for the UE. Furthermore, the UE may multiplex a CSI report with other UCI according to some implementations of the specification described below.

Hereinafter, a series of processes required for the UE to perform channel state reporting based on a result of PDSCH reception will be described. For example, a method and procedure for selecting a PDSCH for a channel state report and configuring the content of the channel state report, a method and procedure for the BS to indicate or configure UL resources required to transmit the channel state report, and a method and procedure for the UE to multiplex the channel state report with other UCI will be explained.

### UE Side:

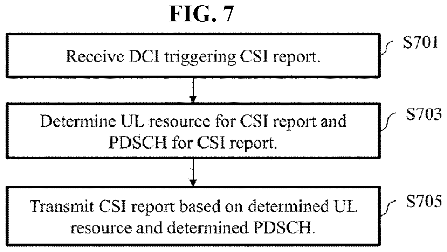

FIG. 7 illustrates an example of UE operation flows according to some implementations of the present disclosure.

The UE may receive higher layer parameter(s) required for CSI reporting based on PDSCH reception (S701).That is, the UE may receive the configuration for the PDSCH-based CSI reporting. Subsequently, the UE may receive DCI that triggers a CSI report (S701). The UE may determine a PDSCH for the CSI report among PDSCH(s) scheduled by scheduling DCI and/or semi-statically scheduled PDSCH(s) and a UL resource for the CSI report (S703). The UE may report CSI based on the determined UL resource and the determined PDSCH.

In some implementations of the present disclosure, the following UE operations(s) may be considered.

### <Implementation A1> PDSCH Reception Based CSI Reporting

In some implementations, the UE may receive a PDSCH and transmit a result of receiving the PDSCH as CSI on a PUCCH or PUSCH resource. The PDSCH reception result may include at least one of the following:
> Received power of each RE on the PDSCH;
> The log-likelihood ratio (LLR) of received soft bits, or the LLR and a predefined minimum required LLR (e.g., minimum LLR of bits);
> The signal to interference and noise ratio (SINR) of the PDSCH; and/or
> Decoding iteration required until successful PDSCH reception.

In some implementations, the UE may convert the PDSCH reception result into at least one of the following forms and transmit the PDSCH reception result to the BS as the CSI over a PUCCH or PUSCH.
> A CQI based on the PDSCH reception result: For example, the UE may report a required coding rate as the CSI.
> A CQI and/or MCS offset based on the PDSCH reception result: For example, the UE may report the difference between a scheduled or received coding rate and a required coding rate as the CSI.
> An SINR offset in units of dB based on the PDSCH reception result: For example, the UE may report transmit power required for successful PDSCH transmission as the CSI.

### <Implementation A1-1> Determination of PDSCH Occasion/Resource for CSI Reporting

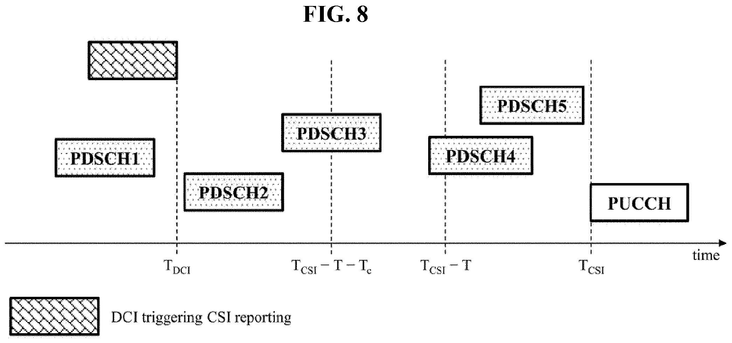

FIG. 8 illustrates PDSCHs related to CSI reporting according to some implementations of the present disclosure.

In applying Implementation A1/B1, the UE may determine a PDSCH resource for CSI reporting based on at least one of the following conditions.
> A PDSCH having the same priority as that indicated by DCI when the CSI reporting is indicated in DCI;
> A PDSCH with a specific priority;
> A PDSCH having a value higher than or equal to a configured modulation order, MCS, or coding rate;
> A PDSCH whose reception ends and that is closest to a time point T_{DCI} at which the CSI reporting is indicated (e.g., PDSCH1 in FIG. 8);
> A PDSCH whose reception ends most recently among PDSCH(s) having a distance from the starting point of a UL resource for the CSI reporting to the last PDSCH symbol greater than or equal to a predetermined time T (e.g., PDSCH3 in FIG. 8);
> A PDSCH whose transmission ends between a time point T_{CSI} - T - T_{c} and a time point T_{CSI} - T when the starting point of the UL resource for the CSI reporting is defined as T_{CSI} (e.g., PDSCH3 in FIG. 8); and/or
> A PDSCH whose transmission starts between the time point T_{CSI} - T - T_{c} and the time point T_{CSI} - T when the starting point of the UL resource for the CSI reporting is defined as T_{CSI} (e.g., PDSCH4 in FIG. 8).

The predetermined time T may be determined based on the capability of the UE and the subcarrier spacing (SCS) used in a cell, which may be a minimum time required for CSI computation. For example, the time required from DCI or PDSCH reception to CSI reporting may be greater than or equal to the predetermined time T.

The predetermined time T_{c} may refer to a PDSCH coherent time. The predetermined time T_{c} may be indicated or configured by the BS to the UE through L1 signaling (e.g., PDCCH) and/or higher layer signaling. Alternatively, the predetermined time T_{c} may have a predefined value.

When there is a PDSCH that satisfies a predetermined condition (e.g., condition(s) described above), the UE may perform the CSI reporting based on the PDSCH reception. When there is no PDSCH that satisfies the predetermined condition (e.g., condition(s) described above), the UE may perform at least one of the following operations.
> Operation 1-1: The UE may report no CSI.
> Operation 1-2: Instead of reporting CSI, the UE may report a bit string (e.g., bit string where all bits are set to 1) or a flag to indicate that there is no suitable PDSCH. To this end, a CSI report based on PDSCH reception may include a one-bit flag indicating the presence or absence of the PDSCH.
> Operation 1-3: The UE may report CSI based on a CSI-RS, instead of reporting CSI based on PDSCH reception. To this end, the BS may configure a fallback CSI-RS for cases where there is no suitable PDSCH. That is, when a PDSCH-based CSI report is supposed to be transmitted on a UL resource reserved for another CSI report based on CSI-RS measurements, if there is no suitable PDSCH, the CSI report may be transmitted.
> Operation 1-4: The UE may not expect that there is no PDSCH suitable for a CSI report indicated to the UE.

### <Implementation A2> Additional Information for PDSCH Based CSI reporting

CSI reporting based on PDSCH reception results may be greatly influenced by a PDSCH reception process, for example, a HARQ retransmission process. For example, if the UE does not correctly receive DCI scheduling a PDSCH, the UE and BS may assume different TBs or perceive different numbers of times that retransmission is actually performed. The mismatch between the UE and BS may result in different interpretations for one CSI report. To address this issue, at least one of the following methods may be considered.
* Method 2-1: The UE may always perform CSI reporting based on a result of receiving a first PDSCH for a specific TB.
* Method 2-2: If the UE is capable of performing CSI reporting based on multiple PDSCHs, the UE may also report the number of PDSCHs used for the CSI reporting.
* Method 2-3: If the PDSCH determined by the UE is a PDSCH that is retransmitted n times for a specific TB, the UE may report the number of times of retransmission n as part of CSI.

### <Implementation A3> PUCCH Resource for PDSCH Based CSI Reporting

The UE may determine UL radio resource(s) for PDSCH-based CSI reporting according to one of the following methods.
* Method 3-1: The UE may receive a CSI configuration X for PDSCH-based CSI reporting through higher layer signaling from the BS. In this case, the CSI configuration X may include PUCCH resource information. If the corresponding CSI configuration X is triggered, the UE may report CSI on a PUCCH resource configured by the CSI configuration X.
* Method 3-2: The UE may receive a CSI configuration X for PDSCH-based CSI reporting through higher layer signaling from the BS, and the CSI configuration X may be in the form of an A-CSI configuration with no CSI-RS information. If the corresponding CSI configuration X is triggered, the UE may report CSI on a PUCCH or PUSCH resource indicated by triggering DCI.
* Method 3-3: The UE may receive a CSI configuration X for PDSCH-based CSI reporting through higher layer signaling from the BS. In this case, the CSI configuration X may refer to the index of at least another CSI configuration Y. If the corresponding CSI configuration X is triggered, the UE may report CSI on a PUCCH resource used by the CSI configuration Y having the referenced index. The other CSI configuration Y may be limited to a P-CSI configuration and/or an SP-CSI configuration. If a plurality of PUCCH resources are used by the CSI configuration Y of the referenced index, the earliest PUCCH resource among PUCCH resources satisfying the following conditions may be selected:
   > A PUCCH resource that is more than a predetermined time T₁ away from the last symbol in which CSI triggering DCI is received; and/or
   > A PUCCH resource that is more than a predetermined time T₂ away from the last symbol of a PDSCH resource used for CSI reporting. The predetermined time T₁ may be determined based on the capability of the UE and the SCS used in a cell, which may be a minimum time required for CSI computation. The predetermined time T₂ may be determined based on the capability of the UE and the SCS used in a cell, which may be a minimum time required to receive a PDSCH and transmit a PUCCH in response thereto.

If the other CSI configuration Y is not triggered in advance, the UE may perform one of the following operations.
> Operation 3-1: The BS may configure a fallback PUCCH resource in the CSI configuration X. When the CSI configuration Y is not triggered, the UE may report CSI on the fallback PUCCH resource according to Method 3-1.
> Operation 3-2: When CSI triggering DCI indicates a PUSCH resource for a UL-SCH or a PUCCH resource for HARQ-ACK transmission, Method 3-2 may be applied.
> Operation 3-3: The UE may report that corresponding CSI triggering is invalid through higher layer signaling such as a MAC control element (CE).
> Operations 4: The UE may report no CSI.

### <Implementation A4> UL Multiplexing with PDSCH Based CSI Reporting

According to some implementations of the present disclosure, when the UE needs to transmit a PDSCH-based CSI report and other UCI in the same slot or symbol, the UE may multiplex the PDSCH-based CSI report and the other UCI according to one of the following methods. For example, if the other UCI that overlaps in time with the CSI report is also another PDSCH-based CSI report, the following method may be used.
* Method 4-1: CSI reporting indices may be included in DCI that triggers CSI reports, and the UE may concatenate and report each triggered CSI report in the index order.
* Method 4-2: PDSCH transmissions used for each CSI report may have the same MCS or modulation order or a certain range of MCSs or modulation orders. For PDSCHs received within a predetermined period of time, the UE may report one piece of CSI recalculated in consideration of all PDSCHs. For example, when there are a plurality of PDSCHs within the predetermined period of time, the UE may calculate CSI to be reported based on the plurality of PDSCHs.
* Method 4-3: The UE may report only the latest triggered CSI and drop other CSI reports.

As another example, when the other UCI overlapping in time with the CSI report has a different type from the PDSCH-based CSI report, the following method may be used.
* Method 4-5: PDSCH-based CSI may be transmitted instead of the other CSI, and transmission of the other CSI may be dropped.
* Method 4-6: PDSCH-based CSI may be encoded separately from the other CSI. If the payload size of entire CSI to be transmitted is greater than the size of resources used for CSI transmission, the UE may drop CSI transmission exceeding the resource size by configuring the payload in the following order.
> 1. PDSCH-based CSI reporting according to some implementations of the present disclosure.
> 2. Other CSI reporting based on a CSI-RS, for example, RSRP reporting, statistics for CSI-RS measurements (e.g., average, standard deviation, etc.).
> 3. CQI, RI, or PMI reporting based on a CS-RS may be omitted. When CSI is divided into two parts (e.g., part 1 for a CQI/RI and part 2 for a PMI), part 1 may be added to the payload first.

### BS Side:

The above-described implementations of the present disclosure will be explained again from the perspective of the BS.

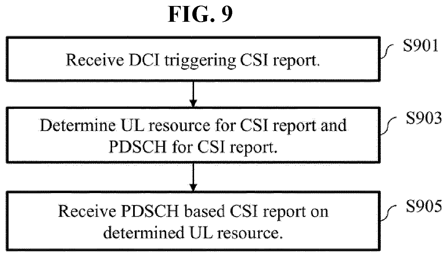

FIG. 9 illustrates an example of BS operation flows according to some implementations of the present disclosure.

The BS may transmit to the UE higher layer parameter(s) required for CSI reporting based on PDSCH reception (S901).That is, the BS may transmit the configuration for the PDSCH-based CSI reporting to the UE. Subsequently, the BS may transmit DCI that triggers a CSI report to the UE (S901). The UE may be allowed to determine a PDSCH for the CSI report among PDSCH(s) scheduled by scheduling DCI and/or semi-statically scheduled PDSCH(s) and a UL resource for the CSI report

(S903). The BS may receive the CSI report by assuming that the UE will transmit the CSI report based on the determined UL resource and the determined PDSCH (S905). For example, the BS may receive the PDSCH-based CSI report on the determined UL resource.

In some implementations of the present disclosure, the following UE operations(s) may be considered.

### <Implementation B1> PDSCH Reception Based CSI Reporting

In some implementations, the BS may transmit a PDSCH to the UE and then receive a PDSCH reception result from the UE as CSI on a PUCCH or PUSCH resource. The PDSCH reception result may include at least one of the following:
> Received power of each RE on the PDSCH;
> The LLR of received soft bits, or the LLR and a predefined minimum required LLR (e.g., minimum LLR of bits);
> The SINR of the PDSCH; and/or
> Decoding iteration required until successful PDSCH reception.

In some implementations, the BS may assume that the UE will convert the PDSCH reception result into at least one of the following forms and transmit the PDSCH reception result as the CSI over a PUCCH or PUSCH.
> A CQI based on the PDSCH reception result: For example, the UE may report a required coding rate as the CSI.
> A CQI and/or MCS offset based on the PDSCH reception result: For example, the UE may report the difference between a scheduled or received coding rate and a required coding rate as the CSI.
> An SINR offset in units of dB based on the PDSCH reception result: For example, the UE may report transmit power required for successful PDSCH transmission as the CSI.

### <Implementation B1-1> Determination of PDSCH Occasion/Resource for CSI Reporting

In applying Implementation A1/B1, the BS may assume that the UE will determine a PDSCH resource for CSI reporting based on at least one of the following conditions.
> A PDSCH having the same priority as that indicated by DCI when the CSI reporting is indicated in DCI;
> A PDSCH with a specific priority;
> A PDSCH having a value higher than or equal to a configured modulation order, MCS, or coding rate;
> A PDSCH whose reception ends and that is closest to a time point T_{DCI} at which the CSI reporting is indicated (e.g., PDSCH1 in FIG. 8);
> A PDSCH whose reception ends most recently among PDSCH(s) having a distance from the starting point of a UL resource for the CSI reporting to the last PDSCH symbol greater than or equal to a predetermined time T (e.g., PDSCH3 in FIG. 8);
> A PDSCH whose transmission ends between a time point T_{CSI} - T - T_{c} and a time point T_{CSI} - T when the starting point of the UL resource for the CSI reporting is defined as T_{CSI} (e.g., PDSCH3 in FIG. 8); and/or
> A PDSCH whose transmission starts between the time point T_{CSI} - T - T_{c} and the time point T_{CSI} - T when the starting point of the UL resource for the CSI reporting is defined as T_{CSI} (e.g., PDSCH4 in FIG. 8).

The predetermined time T may be determined based on the capability of the UE and the SCS used in a cell, which may be a minimum time required for CSI computation. For example, the time required from DCI or PDSCH reception to CSI reporting may be greater than or equal to the predetermined time T.

The predetermined time T_{c} may refer to a PDSCH coherent time. The predetermined time T_{c} may be indicated or configured by the BS to the UE through L1 signaling (e.g., PDCCH) and/or higher layer signaling. Alternatively, the predetermined time T_{c} may have a predefined value.

When there is a PDSCH that satisfies a predetermined condition (e.g., condition(s) described above), the BS may assume that the UE will perform the CSI reporting based on the PDSCH reception. When there is no PDSCH that satisfies the predetermined condition (e.g., condition(s) described above), the BS may assume that the UE will perform at least one of the following operations.
> Operation 1-1: The UE may report no CSI.
> Operation 1-2: Instead of reporting CSI, the UE may report a bit string (e.g., bit string where all bits are set to 1) or a flag to indicate that there is no suitable PDSCH. To this end, a CSI report based on PDSCH reception may include a one-bit flag indicating the presence or absence of the PDSCH.
> Operation 1-3: The UE may report CSI based on a CSI-RS, instead of reporting CSI based on PDSCH reception. To this end, the BS may configure a fallback CSI-RS for cases where there is no suitable PDSCH. That is, when a PDSCH-based CSI report is supposed to be transmitted on a UL resource reserved for another CSI report based on CSI-RS measurements, if there is no suitable PDSCH, the CSI report may be transmitted.
> Operation 1-4: The UE may not expect that there is no PDSCH suitable for a CSI report indicated to the UE.

### <Implementation B2> Additional Information for PDSCH Based CSI reporting

CSI reporting based on PDSCH reception results may be greatly influenced by a PDSCH reception process, for example, a HARQ retransmission process. For example, if the UE does not correctly receive DCI scheduling a PDSCH, the UE and BS may assume different TBs or perceive different numbers of times that retransmission is actually performed. The mismatch between the UE and BS may result in different interpretations for one CSI report. To address this issue, at least one of the following methods may be considered.
* Method 2-1: The UE may always perform CSI reporting based on a result of receiving a first PDSCH for a specific TB.
* Method 2-2: If the UE is capable of performing CSI reporting based on multiple PDSCHs, the UE may also report the number of PDSCHs used for the CSI reporting.
* Method 2-3: If the PDSCH determined by the UE is a PDSCH that is retransmitted n times for a specific TB, the UE may report the number of times of retransmission n as part of CSI.

### <Implementation B3> PUCCH Resource for PDSCH Based CSI Reporting

The BS may assume that the UE will determine UL radio resource(s) for PDSCH-based CSI reporting according to one of the following methods.
* Method 3-1: The BS may transmit a CSI configuration X for PDSCH-based CSI reporting to the UE through higher layer signaling. In this case, the CSI configuration X may include PUCCH resource information. If the corresponding CSI configuration X is triggered, the UE may report CSI on a PUCCH resource configured by the CSI configuration X.
* Method 3-2: The BS may transmit a CSI configuration X for PDSCH-based CSI reporting to the UE through higher layer signaling. In this case, the CSI configuration X may be in the form of an A-CSI configuration with no CSI-RS information. If the corresponding CSI configuration X is triggered, the UE may report CSI on a PUCCH or PUSCH resource indicated by triggering DCI.
* Method 3-3: The BS may transmit a CSI configuration X for PDSCH-based CSI reporting through higher layer signaling. In this case, the CSI configuration X may refer to the index of at least another CSI configuration Y. If the corresponding CSI configuration X is triggered, the UE may report CSI on a PUCCH resource used by the CSI configuration Y having the referenced index. The other CSI configuration Y may be limited to a P-CSI configuration and/or an SP-CSI configuration. If a plurality of PUCCH resources are used by the CSI configuration Y of the referenced index, the earliest PUCCH resource among PUCCH resources satisfying the following conditions may be selected:
   > A PUCCH resource that is more than a predetermined time T₁ away from the last symbol in which CSI triggering DCI is received; and/or
   > A PUCCH resource that is more than a predetermined time T₂ away from the last symbol of a PDSCH resource used for CSI reporting. The predetermined time T₁ may be determined based on the capability of the UE and the SCS used in a cell, which may be a minimum time required for CSI computation. The predetermined time T₂ may be determined based on the capability of the UE and the SCS used in a cell, which may be a minimum time required to receive a PDSCH and transmit a PUCCH in response thereto.

If the other CSI configuration Y is not triggered in advance, the BS may assume that the UE will perform one of the following operations.
> Operation 3-1: The BS may configure a fallback PUCCH resource in the CSI configuration X. When the CSI configuration Y is not triggered, the UE may report CSI on the fallback PUCCH resource according to Method 3-1.
> Operation 3-2: When CSI triggering DCI indicates a PUSCH resource for a UL-SCH or a PUCCH resource for HARQ-ACK transmission, Method 3-2 may be applied.
> Operation 3-3: The UE may report that corresponding CSI triggering is invalid through higher layer signaling such as a MAC CE.
> Operations 4: The UE may report no CSI.

### <Implementation B4> UL Multiplexing with PDSCH Based CSI Reporting

According to some implementations of the present disclosure, when the BS receives a PDSCH-based CSI report and other UCI from the UE in the same slot or symbol, the BS may assume that the UE multiplexes the PDSCH-based CSI report and the other UCI according to one of the following methods. For example, if the other UCI that overlaps in time with the PDSCH-based CSI report is also another PDSCH-based CSI report, the BS may assume that the UE uses the following method.
* Method 4-1: CSI reporting indices may be included in DCI that triggers CSI reports, and the UE may concatenate and report each triggered CSI report in the index order.
* Method 4-2: PDSCH transmissions used for each CSI report may have the same MCS or modulation order or a certain range of MCSs or modulation orders. For PDSCHs received within a predetermined period of time, the UE may report one piece of CSI recalculated in consideration of all PDSCHs. For example, when there are a plurality of PDSCHs within the predetermined period of time, the UE may calculate CSI to be reported based on the plurality of PDSCHs.
* Method 4-3: The UE may report only the latest triggered CSI and drop other CSI reports.

As another example, when the other UCI overlapping in time with the PDSCH-based CSI report has a different type from the PDSCH-based CSI report, the following method may be used.
* Method 4-5: PDSCH-based CSI may be transmitted instead of the other CSI, and transmission of the other CSI may be dropped.
* Method 4-6: PDSCH-based CSI may be encoded separately from the other CSI. If the payload size of entire CSI to be transmitted is greater than the size of resources used for CSI transmission, the UE may drop CSI transmission exceeding the resource size by configuring the payload in the following order.
   > 1. PDSCH-based CSI reporting according to some implementations of the present disclosure.
   > 2. Other CSI reporting based on a CSI-RS, for example, RSRP reporting, statistics for CSI-RS measurements (e.g., average, standard deviation, etc.).
   > 3. CQI, RI, or PMI reporting based on a CS-RS may be omitted. When CSI is divided into two parts (e.g., part 1 for a CQI/RI and part 2 for a PMI), part 1 may be added to the payload first.

In some implementations of the present disclosure, the BS may provide the UE with a configuration for CSI reporting based on a PDSCH reception result through higher layer signaling. The BS and UE may select the same PDSCH for PDSCH-based CSI reporting from among scheduled PDSCH(s) according to some implementations of the present disclosure. The UE may transmit a CSI report based on a result of receiving the selected PDSCH, and the BS may determine the channel state of the UE by analyzing the received CSI report based on the selected PDSCH.

According to some implementations of the present disclosure, since the UE performs CSI reporting based on a received PDSCH, the UE may report CSI with no CSI-RS measurements. According to some implementations of the present disclosure, PDSCH-based CSI reporting may reduce the time required for a CSI-RS measurement process, and thus faster CSI reporting may be achieved, compared to CSI-RS based CSI reporting. According to some implementations of the present disclosure, since a PDSCH is used for CSI reporting, the BS may obtain CSI from the UE without transmitting a CSI-RS for CSI measurement. According to some implementations of the present disclosure, a CSI-RS does not need to be provided separately, and thus resources for CSI-RS transmission may be saved.

For transmitting a CSI report, a UE may perform operations according to some implementations of the present disclosure. The UE may include: at least one transceiver; at least one processor; and at least one computer memory operably connected to the at least one processor and configured to store instructions that, when executed, cause the at least one processor to perform the operations according to some implementations of the present disclosure. A processing device for a UE may include: at least one processor; and at least one computer memory operably connected to the at least one processor and configured to store instructions that, when executed, cause the at least one processor to perform the operations according to some implementations of the present disclosure. A computer-readable (non-transitory) storage medium may store at least one computer program including instructions that, when executed by at least one processor, cause the at least one processor to perform the operations according to some implementations of the present disclosure. A computer program or computer program product may include instructions stored on at least one computer-readable (non-volatile) storage medium and, when executed, cause (at least one processor) to perform the operations according to some implementations of the present disclosure.

For the UE, processing device, computer-readable (non-volatile) storage medium, and/or computer program product, the operations may include: receiving DCI triggering the CSI report; determining a UL resource for the CSI report based on the DCI; determining a PDSCH for the CSI report based on the UL resource and a CSI computation time; determining CSI based on the PDSCH; and transmitting the CSI report including the CSI on the UL resource.

In some implementations, determining the PDSCH for the CSI report based on the UL resource and the CSI computation time may include determining, as the PDSCH for the CSI report, a most recently received PDSCH among PDSCHs with a distance of T or more from a start of the UL resource, T_CSI to an end of each of the corresponding PDSCHs, where T is the CSI computation time.

In some implementations, determining the PDSCH for the CSI report based on the UL resource and the CSI computation time may include determining a PDSCH of which reception ends between a time of T_CSI - T - T_c and a time of T_CSI - T as the PDSCH for the CSI report, where T_CSI is a start of the UL resource, T is the CSI computation time, and T_c is a PDSCH coherent time.

In some implementations, determining the PDSCH for the CSI report based on the UL resource and the CSI computation time may include determining a PDSCH of which reception starts between a time of T_CSI - T - T_c and a time of T_CSI - T as the PDSCH for the CSI report, where T_CSI is a start of the UL resource, T is the CSI computation time, and T_c is a PDSCH coherent time.

In some implementations, the operations may further include receiving a CSI configuration for a PDSCH-based CSI report.

In some implementations, the CSI configuration may include information on a PUCCH.

In some implementations, the operations may include, based on the transmission of the CSI report overlapping in time with transmission of other UCI and the other UCI being another PDSCH-based CSI report: concatenating the CSI report and the other PDSCH-based CSI report; and transmitting the concatenated CSI report.

In some implementations, the operations may include, based on the transmission of the CSI report overlapping in time with transmission of other UCI and the other UCI being a different type of CSI report, dropping the transmission of the other UCI.

For receiving a CSI report, a BS may perform operations according to some implementations of the present disclosure. The BS may include: at least one transceiver; at least one processor; and at least one computer memory operably connected to the at least one processor and configured to store instructions that, when executed, cause the at least one processor to perform the operations according to some implementations of the present disclosure. A processing device for a BS may include: at least one processor; and at least one computer memory operably connected to the at least one processor and configured to store instructions that, when executed, cause the at least one processor to perform the operations according to some implementations of the present disclosure. A computer-readable (non-transitory) storage medium may store at least one computer program including instructions that, when executed by at least one processor, cause the at least one processor to perform the operations according to some implementations of the present disclosure. A computer program or computer program product may include instructions stored on at least one computer-readable (non-volatile) storage medium and, when executed, cause (at least one processor) to perform the operations according to some implementations of the present disclosure.

For the BS, processing device, computer readable (non-volatile) storage medium, and/or computer program product, the operations may include: transmitting DCI triggering the CSI report to a UE; determining a UL resource for the CSI report based on the DCI; determining a PDSCH for the CSI report based on the UL resource and a CSI computation time; and receiving the CSI report including CSI based on the PDSCH on the UL resource.

In some implementations, determining the PDSCH for the CSI report based on the UL resource and the CSI computation time may include determining, as the PDSCH for the CSI report, a most recently transmitted PDSCH among PDSCHs with a distance of T or more from a start of the UL resource, T_CSI to an end of each of the corresponding PDSCHs, where T is the CSI computation time.

In some implementations, determining the PDSCH for the CSI report based on the UL resource and the CSI computation time may include determining a PDSCH of which transmission ends between a time of T_CSI - T - T_c and a time of T_CSI - T as the PDSCH for the CSI report, where T_CSI is a start of the UL resource, T is the CSI computation time, and T_c is a PDSCH coherent time.

In some implementations, determining the PDSCH for the CSI report based on the UL resource and the CSI computation time may include determining a PDSCH of which transmission starts between a time of T_CSI - T - T_c and a time of T_CSI - T as the PDSCH for the CSI report, where T_CSI is a start of the UL resource, T is the CSI computation time, and T_c is a PDSCH coherent time.

In some implementations, the operations may further include transmitting a CSI configuration for a PDSCH-based CSI report.

In some implementations, the CSI configuration may include information on a PUCCH.

In some implementations, the operations may include, based on the reception of the CSI report overlapping in time with reception of other UCI and the other UCI being another PDSCH-based CSI report, receiving a CSI report obtained by concatenating the CSI report and the other PDSCH-based CSI report.

In some implementations, the operations may include, based on the reception of the CSI report overlapping in time with reception of other UCI and the other UCI being a different type of CSI report, dropping the reception of the other UCI.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

### INDUSTRIAL APPLICABILITY

The implementations of the present disclosure may be used in a BS, a UE, or other equipment in a wireless communication system.

## Claims

1. A method of transmitting a channel state information (CSI) report by a user equipment (UE) in a wireless communication system, the method comprising:
receiving downlink control information (DCI) triggering the CSI report;
determining an uplink (UL) resource for the CSI report based on the DCI;
determining a physical downlink shared channel (PDSCH) for the CSI report based on the UL resource and a CSI computation time;
determining CSI based on the PDSCH; and
transmitting the CSI report including the CSI on the UL resource.

2. The method of claim 1, wherein determining the PDSCH for the CSI report based on the UL resource and the CSI computation time comprises determining, as the PDSCH for the CSI report, a most recently received PDSCH among PDSCHs with a distance of T or more from a start of the UL resource, T_CSI to an end of each of the corresponding PDSCHs, where T is the CSI computation time.

3. The method of claim 1, wherein determining the PDSCH for the CSI report based on the UL resource and the CSI computation time comprises determining a PDSCH of which reception ends between a time of T_CSI - T - T_c and a time of T_CSI - T as the PDSCH for the CSI report, where T_CSI is a start of the UL resource, T is the CSI computation time, and T_c is a PDSCH coherent time.

4. The method of claim 1, wherein determining the PDSCH for the CSI report based on the UL resource and the CSI computation time comprises determining a PDSCH of which reception starts between a time of T_CSI - T - T_c and a time of T_CSI - T as the PDSCH for the CSI report, where T_CSI is a start of the UL resource, T is the CSI computation time, and T_c is a PDSCH coherent time.

5. The method of claim 1, further comprising receiving a CSI configuration for a PDSCH-based CSI report.

6. The method of claim 5, wherein the CSI configuration includes information on a physical uplink control channel (PUCCH).

7. The method of claim 1, comprising, based on the transmission of the CSI report overlapping in time with transmission of other uplink control information (UCI) and the other UCI being another PDSCH-based CSI report:
concatenating the CSI report and the other PDSCH-based CSI report; and
transmitting the concatenated CSI report.

8. The method of claim 1, comprising, based on the transmission of the CSI report overlapping in time with transmission of other uplink control information (UCI) and the other UCI being a different type of CSI report, dropping the transmission of the other UCI.

9. A user equipment (UE) configured to transmit a channel state information (CSI) report in a wireless communication system, the UE comprising:
at least one transceiver;
at least one processor; and
at least one computer memory operably connected to the at least one processor and configured to store instructions that, when executed, cause the at least one processor to perform operations comprising:
receiving downlink control information (DCI) triggering the CSI report;
determining an uplink (UL) resource for the CSI report based on the DCI;
determining a physical downlink shared channel (PDSCH) for the CSI report based on the UL resource and a CSI computation time;
determining CSI based on the PDSCH; and
transmitting the CSI report including the CSI on the UL resource.

10. A processing device in a wireless communication system, the processing device comprising:
at least one processor; and
at least one computer memory operably connected to the at least one processor and configured to store instructions that, when executed, cause the at least one processor to perform operations comprising:
receiving downlink control information (DCI) triggering a channel state information (CSI) report;
determining an uplink (UL) resource for the CSI report based on the DCI;
determining a physical downlink shared channel (PDSCH) for the CSI report based on the UL resource and a CSI computation time;
determining CSI based on the PDSCH; and
transmitting the CSI report including the CSI on the UL resource.

11. A computer-readable storage medium configured to store at least one program code comprising instructions that, when executed, cause at least one processor to perform operations comprising:
receiving downlink control information (DCI) triggering a channel state information (CSI) report;
determining an uplink (UL) resource for the CSI report based on the DCI;
determining a physical downlink shared channel (PDSCH) for the CSI report based on the UL resource and a CSI computation time;
determining CSI based on the PDSCH; and
transmitting the CSI report including the CSI on the UL resource.

12. A computer program stored in a computer-readable storage medium, the computer program,
receiving downlink control information (DCI) triggering a channel state information (CSI) report;
determining an uplink (UL) resource for the CSI report based on the DCI;
determining a physical downlink shared channel (PDSCH) for the CSI report based on the UL resource and a CSI computation time;
determining CSI based on the PDSCH; and
transmitting the CSI report including the CSI on the UL resource.

13. A method of receiving a channel state information (CSI) report by a base station (BS) in a wireless communication system, the method comprising:
transmitting downlink control information (DCI) triggering the CSI report to a user equipment (UE);
determining an uplink (UL) resource for the CSI report based on the DCI;
determining a physical downlink shared channel (PDSCH) for the CSI report based on the UL resource and a CSI computation time; and
receiving the CSI report including CSI based on the PDSCH on the UL resource.

14. A base station (BS) configured to receive a channel state information (CSI) report in a wireless communication system, the BS comprising:
at least one transceiver;
at least one processor; and
at least one computer memory operably connected to the at least one processor and configured to store instructions that, when executed, cause the at least one processor to perform operations comprising:
transmitting downlink control information (DCI) triggering the CSI report to a user equipment (UE);
determining an uplink (UL) resource for the CSI report based on the DCI;
determining a physical downlink shared channel (PDSCH) for the CSI report based on the UL resource and a CSI computation time; and
receiving the CSI report including CSI based on the PDSCH on the UL resource.
